**Europäisches Patentamt**

**European Patent Office**

**Office européen des brevets**

(19)

(11) Veröffentlichungsnummer: **0 203 480**
**A2**

(12) # EUROPÄISCHE PATENTANMELDUNG

(21) Anmeldenummer: **86106690.0**

(22) Anmeldetag: **16.05.86**

(51) Int. Cl.⁴: **F02B 55/10**

(30) Priorität: **30.05.85 US 739397**

(43) Veröffentlichungstag der Anmeldung:
**03.12.86 Patentblatt 86/49**

(84) Benannte Vertragsstaaten:
**DE FR GB IT**

(71) Anmelder: **DEERE & COMPANY**
**1 John Deere Road**
**Moline Illinois 61265(US)**

(72) Erfinder: **Jones, Charles**
**208 Forest Drive**
**Hillsdale New Jersey 07642(US)**

(74) Vertreter: **Sartorius, Peter et al**
**DEERE & COMPANY European Office, Patent**
**Department Postfach 503 Steubenstrasse**
**36-42**
**D-6800 Mannheim 1(DE)**

(54) **Drehkolbenverbrennungsmotor.**

(57) Ein Drehkolbenverbrennungsmotor mit einem Drehkolbenzylindergehäuse ist mit zahlreichen im Bereich der Zylinderwand angeordneten Kühlmittelkanälen (58-76) ausgerüstet, die sich axial durch die Gehäusewand erstrecken. Die Kühlmittelkanäle sind gruppenweise angeordnet und stehen mit Kühlmittelkanälen weiterer Gruppen in den einzelnen Drehkolbenzylinder-Gehäuseteilen in Durchflußverbindung. Damit ein gleichmäßiger Kühlmittelfluß und eine gleichmäßige Wärmeabfuhr gewährleistet sind, sind einige Kühlmittelkanäle mit Querschnittsverengungen versehen.

FIG. 1

EP 0 203 480 A2

# Drehkolbenverbrennungsmotor

Die Erfindung bezieht sich auf einen Drehkolbenverbrennungsmotor mit mindestens einem trochoidförmigen Drehkolbenzylinder-Gehäuseteil und mit gruppenweise angeordneten Kühlmittelkanälen, die sich zumindest durch den oberen Totpunktbereich des Gehäuses erstrecken.

Es sind bereits Kühlsysteme für Drehkolbenverbrennungsmotoren bekannt (US-A-2 988 065), die aus zahlreichen im wesentlichen parallel zueinander verlaufenden Kühlmittelkanälen bestehen, die sich durch das Gehäuse des Drehkolbenverbrennungsmotors erstrecken. Die einzelnen Drehkolbenzylindergehäuse bestehen aus Gehäuseteilen, die end-und stirnseitig über Gehäuse-Endteile verschlossen sind. Bei derartigen Kühlsystemen erfolgt der primäre Wärmetransfer durch Konvektion (US-A-3 895 889, 3 289 647, 3 572 984 und 3 007 460). Bei den bekannten Kühlsystemen fließt das Kühlmittel durch zahlreiche Kühlmittelkanäle, und zwar zuerst durch den wärmeren Bereich des Gehäuses und dann durch den kühleren Bereich stromabwärts in den heißeren Bereich. In dem Kühlsystem nach der US-A-3 895 889 wird der Kühlmittelfluß in zwei getrennte Kühlmittelströme aufgeteilt. Dabei fließt ein Kühlmittelstrom direkt von der kühleren Einlaßöffnung durch den kühleren Teil des Gehäuses. Der andere Kühlmittelstrom fließt von dem Einlaßteil zu dem wärmeren Bereich des Gehäuses. Hierbei erfolgt der Wärmetransfer durch Konvektion, indem der Kühlmittelstrom durch den wärmeren Bereich des Gehäuses fließt, ohne daß dabei eine Druckmittelherabsetzung des Kühlmittels erfolgt, da der erste Kühlmittelstrom zuerst den kühleren Bereich des Gehäuses passiert. Bei Drehkolbenverbrennungsmotoren mit größerer Leistung kann der Wärmefluß bzw. die Wärmeaufnahme einen Betrag erreichen, der so hoch liegt, daß eine adäquate Kühlung nicht mehr durch Konvektionskühlung erreicht werden kann. Bei solchen Motoren wird die Kühlung vorwiegend durch nukleares Verdampfen im hießen Strömungs bereich der Verbrennungskraftmaschine durchgeführt (Verdampfungskühlung). Demgegenüber ist es jedoch wünschenswert, ein Kühlsystem zu - schaffen, in dem der nukleare Verdampfungs-und Kühlprozeß verbessert wird.

Bei Drehkolbenverbrennungsmotoren mit mehrschichtiger Ladung (US-A-4 083 329) sind im Bereich der Einspritzbohrung und der Kerzenbohrung relativ große Angüsse vorgesehen. Diese Angüsse sind im heißesten Strömungsbereich der Maschine, insbesondere im Totpunktbereich, vorgesehen. Um diesen Bereich der Verbrennungskraftmaschine wirksam abzukühlen, ist es bekannt, die Kühlkanäle in den Bereich der V-förmigen Aussparung zu führen, und zwar zwischen die Einspritzbohrung und die Kerzenbohrung (US-A-4 091 789). Demgegenüber ist es jedoch wünschenswert, einen gleichmäßigen Kühlmittelfluß durch die einzelnen Kühlmittelkanäle zu erreichen, um eine adäquate Kühlung aller Teil im Totpunktbereich der Verbrennungskraftmaschine zu gewährleisten.

Diese Aufgabe wird durch die im kennzeichnenden Teil des Anspruches 1 aufgeführten Merkmale gelöst. Durch die vorteilhafte Anordnung der einzelnen Kühlmittelkanäle wird ein Kühlsystem geschaffen, in dem über den gesamten Bereich für alle Teile des Drehkolbenverbrennungsmotors eine gleichmäßige und ausgewogene Abkühlung erfolgt, insbesondere im Totpunktbereich des Motors.

Dabei ist es ferner vorteilhaft, daß die einzelnen Kühlmittelkanäle sich axial durch die einzelnen Gehäuseabschnitte entlang der Peripherie der trochoidförmigen Gehäusewand erstrecken, so daß Kühlmittel in das Gehäuse eintritt, insbesondere im Bereich der Einlaßöffnung. Vorteilhaft ist es auch, daß Teilerrippen im Endbereich des Gehäuses vorgesehen sind, die das Kühlmittel in entsprechende Kühlströme aufteilen, so daß es auf einfache Weise in den kälteren Bereich des Motors gelangt und dann in den wärmeren Bereich oder Totpunktbereich des Motors. Die größte Kühlmittelgeschwindigkeit wird insbesondere im Totpunktbereich des Motors gewährleistet. Fließt das Kühlmittel zuerst durch den kühleren Bereich, so sinkt der Kühlmitteldruck ab, vermindert die Kühlmittelsättigungs-Temperatur und verbessert dadurch das nukleare Verdampfen und gleichzeitig den Wärmetransfer, der im Totpunktbereich stromabwärts der kühleren Bereiche des Motors wirkt. In vorteilhafter Weise sind einige der Kühlmittelkanäle mit Verengungen versehen, um einen gesteuerten Kühlmittelfluß zu erreichen und somit in allen Bereichen des Verbrennungsmotors einen gleichmäßigen Wärmetransport und eine gute Wärmeabfuhr sicherzustellen.

Vorteilhafte Weiterbildungen der Erfindung sind Gegenstand der Unteransprüche.

Im folgenden wird die Erfindung anhand von lediglich einen Ausführungsweg darstellenden Zeichnungen näher erläutert. Es zeigt:

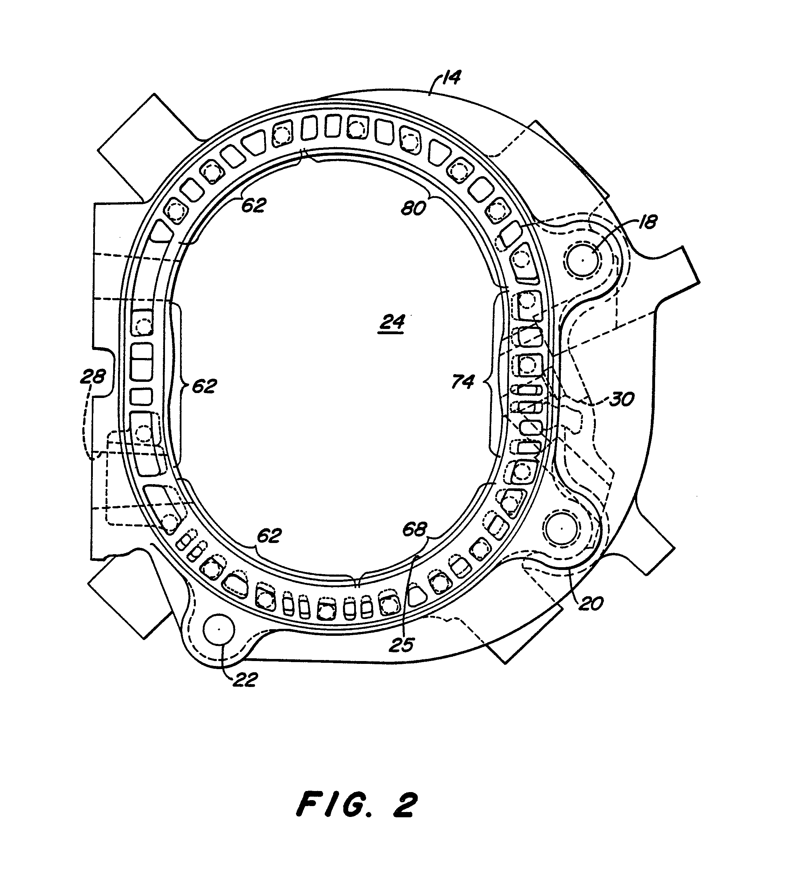

Fig. 1 -3 die Endansicht des Gehäuseschnittes eines Drehkolbenmotors mit dem zugehörigen Kühlungssystem,

Fig. 4 eine vergrößerte Darstellung des oberen Teiles des Drehkolbengehäuses (Totpunktstellung) mit den Aussparungen zur Aufnahme der Kerze und der Einspritzdüse, Fig. 5 einen Schnitt entlang der Linie 5 -5 gemäß Fig. 4,

Fig. 6 einen Schnitt entlang der Linie 6 -6 gemäß Fig. 4,

Fig. 7 eine vergrößerte Darstellung der Rückansicht des oberen Teiles des Drehkolbengehäuses (Totpunktstellung) gemäß Fig. 3,

Fig. 8 -10 Teilschnittdarstellungen entlang der Linien 8 - 8, 9 -9, 10 -10 gemäß Fig. 7.

In der Zeichnung ist mit 12 ein Gehäuseteil - (Anti-Antriebsende = ADE = Anti-Drive-End) bezeichnet, dem ein trochoidförmiger Gehäuseteil 14 sowie ein Gehäuseteil 16 (Antriebsende = DE) zugeordnet ist. Die Gehäuseteile 12, 14 und 16 sind über in der Zeichnung nicht dargestellte Dübel zusammengehalten und untereinander ausgerichtet, die sich hierzu durch untereinander fluchtende Bohrungen 18, 20 und 22 erstrecken. Die Gehäuseteile 12, 14 und 16 werden ferner durch in der Zeichnung nicht dargestellte Bolzen miteinander verbunden, die sich ebenfalls durch in der Zeichnung nicht dargestellte Bohrungen in den Gehäuseteilen erstrekken.

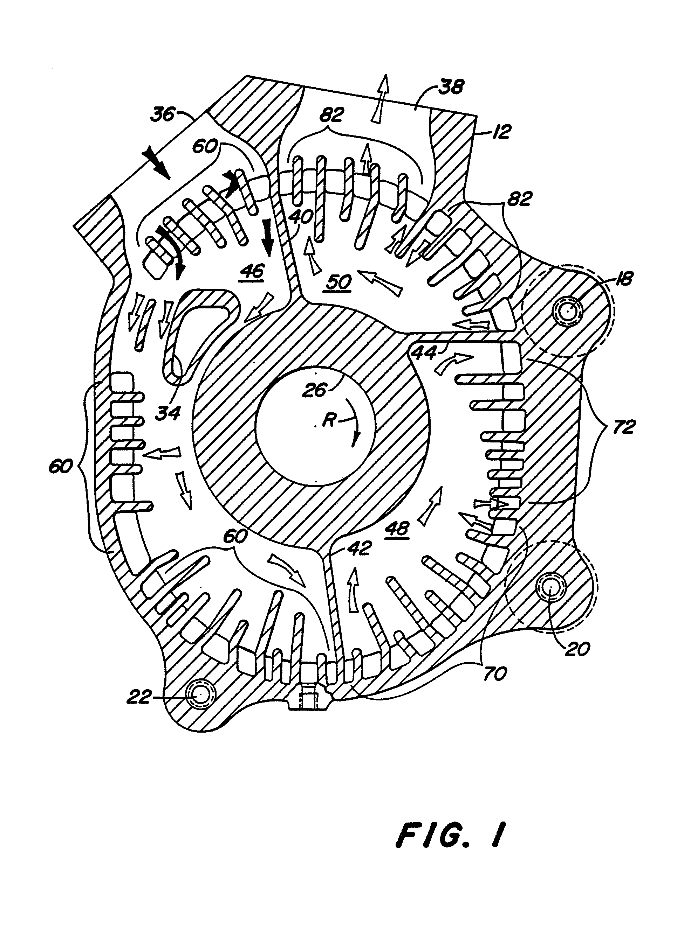

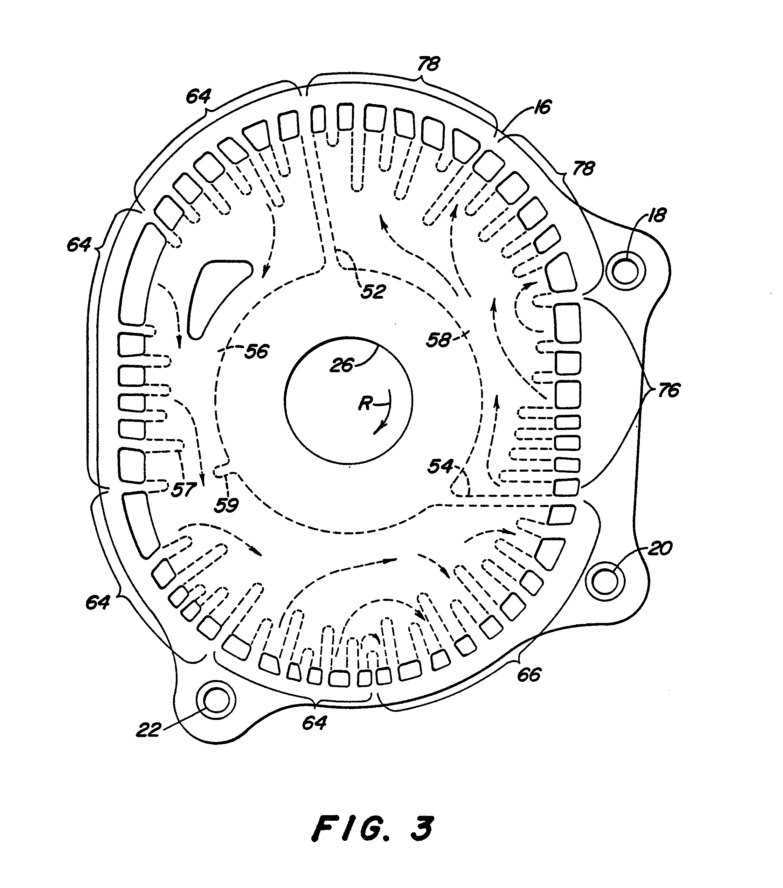

In zusammengebautem Zustand weist die Gehäusekammer 24 eine Gehäusewand 25 auf, die nach einer trochoiden Kurvenbahn gebildet ist. Das Gehäuse 24 dient zur Aufnahme eines in der Zeichnung nicht dargestellten Drehkolbens, der auf einer in der Zeichnung ebenfalls nicht dargestellten Welle angeordnet ist, die sich durch in den Gehäuseteilen 14 und 16 vorgesehene Bohrungen 26 erstreckt. Das Antriebsende bzw. der Gehäuseteil 12 weist eine Auslaßöffnung 28 sowie eine Zündkerzenbohrung 30 auf. Der Gehäuseteil 12 weist eine Einlaßöffnung 34 auf, die zur Einführung der Luft in die in der Zeichnung nicht dargestellte Verbrennungskammer dient. Die Verbrennungskammer wird durch die Bewegungsbahn der Dichtelemente des Drehkolbens beschrieben und entspricht dem Gehäuse 24. Es liegt im Rahmen der vorliegenden Erfindung, der Verbrennungskammer das geeignete Verbrennungsgemisch zur Verfügung zu stellen. Wie aus den Figuren 1 und 3 hervorgeht, ist die Strömung der Kühlluft durch die Pfeile wiedergegeben, die entgegengesetzt zur Drehrichtung R des Drehkolbens verläuft.

Die einzelnen Gehäuseteile 12 bis 16 sind so ausgerichtet, daß die Hauptachse des trochoidförmigen Gehäuses 24 in etwa vertikal verläuft. Ebenso sind die Auslaßöffnung 28, die Einlaßöffnung 34 und die Zündkerzenbohrung 30 so angeordnet, daß durch die Verbrennung eine gute Wärmeverteilung entsteht, wobei der Bereich des größten Wärmeflusses entlang der Seite des Gehäuses 10 verläuft, in der die nicht dargestellten Zündkerzen angeordnet sind. Der Bereich zwischen den Bohrungen 18 und 20 wird als oberes Totpunktzentrum (TDC -Top-Dead-Centre) bezeichnet. Der Wärmeflußverlauf ist im Detail in der US-A-3 895 889 beschrieben.

Das vorliegende Kühlsystem weist eine Kühleinlaßöffnung 36 und eine Kühlauslaßöffnung 38 auf, die im oberen Bereich des Gehäuses 12 - (ADE) vorgesehen sind. Die Kühleinlaßöffnung 36 befindet sich in der Nähe der Einlaßöffnung 34.

Die Kühlauslaßöffnung 38 befindet sich im Bereich der Kühleinlaßöffnung 36 und im Kompressionsbereich zwischen der Einlaßöffnung 34 und dem oberen Totpunktzentrum des Gehäuses der Verbrennungskraftmaschine. Der Endteil des Gehäuseteils 12 ist nicht dargestellt, so daß die Rippen bzw. Stege 40, 42 und 44, die die Kammern 46, 48 und 50 bilden, besser dargestellt werden können. Der Gehäuseteil 16 (Fig. 3) weist Rippen 52 und 54 auf, die Kammern 56 und 58 bilden. Die beschriebenen Kammern sind natürlich von der Vorder-und Hinterseite her durch nicht dargestellte Deckel der Gehäuseteile 14 und 16 verschlossen. Das Kühlmittel fließt von der Kühleinlaßöffnung 36 in die Kammer 46 und dann von der Kammer 46 durch den Kühlteil des Gehäuseteiles über verschiedene in Gruppen angeordnete Kanäle 60, 62 und 64 in den Gehäuseteilen 12, 14 und 16, bis es dann in die Kammer 56 des Gehäuseteiles 16 (DE) gelangt. Das Kühlmittel fließt ferner durch die Kammer 56 und kann zurück in den heißeren Teil des Gehäuseteils 10 über sich axial erstreckende Känalegruppen (Kanäle 66, 68 und 70) zur Kammer 48 im Gehäuseteil 12 (ADE). Das Kühlmittel fließt ferner durch die Kammer 48 und dann zu dem relativ hießen oberen Totpunktteil des Gehäuses über die sich axial erstrekkenden, in Gruppen angeordneten Kanäle 72, 74 und 76 in die Kammer 58 des Gehäuseteils 16 (DE). Schließlich strömt das Kühlmittel durch die Kammer 58 und über die sich axial erstreckenden, in Gruppen angeordneten Kanäle 78, 80 und 82 zurück durch den relativ heiß verbleibenden Teil des Gehäuses 10 in die Kammer 50 des Gehäuseteils 12 (ADE) und dann zur Kühlauslaßöffnung 38. Es ist darauf hinzuweisen, daß das Kühlmittel, bevor es den heißesten oberen Totpunktteil das Gehäuses erreicht, zuerst durch den kühlsten Gehäuseteil über die Kammer 46, die Kanäle 60, 62 und 64 und die Kammer 56 fließen muß. Dabei verläuft die Strömungsrichtung des Kühlmittels durch den kühleren Gehäuseteil in den Kammern 46 und 58 grundsätzlich nach unten. Der Kühlmittelfluß zu den heißeren Gehäuseteilen in den Kammern 48, 50 und 58 verläuft grundsätzlich nach oben. Durch die nach oben gerichtete Strömungsrichtung in den heißeren Bereich wird gewährleistet, daß Luftblasen bzw. Dampf auf einfache Weise entweichen können.

Wie aus Fig. 3 hervorgeht, weist der Gehäuseteil 16 (DE) Rippen 57 und 59 auf, die sich in der Kammer 56 gegenüberliegen und den nach unten gerichteten Kühlmittelfluß in der Kammer 56 einschränken. Die Verengungen zwischen den Rippen 57 und 59 gewährleisten, daß ein gleichmäßiges Kühlmittelvolumen sich durch die sich axial erstreckenden, in Gruppen angeordneten Kanäle 60, 62 und 64 beiderseits der Verengung zwischen den Rippen 57 und 59 bewegt und somit sicherstellt, daß ein ausreichender Kühlmittelfluß sich durch das Gehäuse im Bereich der Auslaßöffnung 28 bewegt.

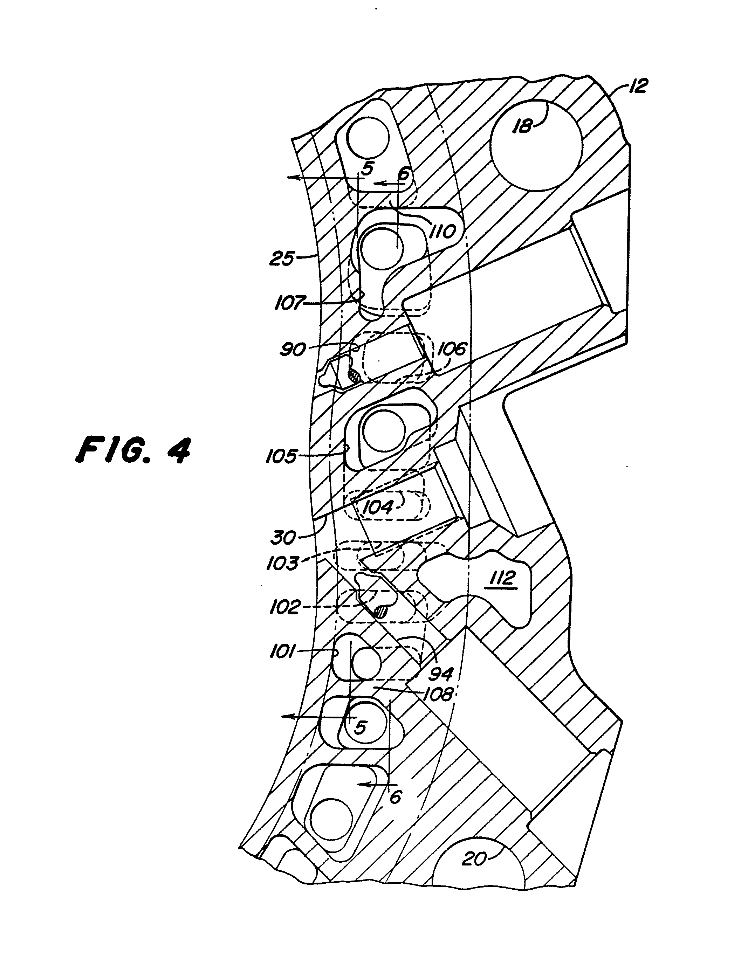

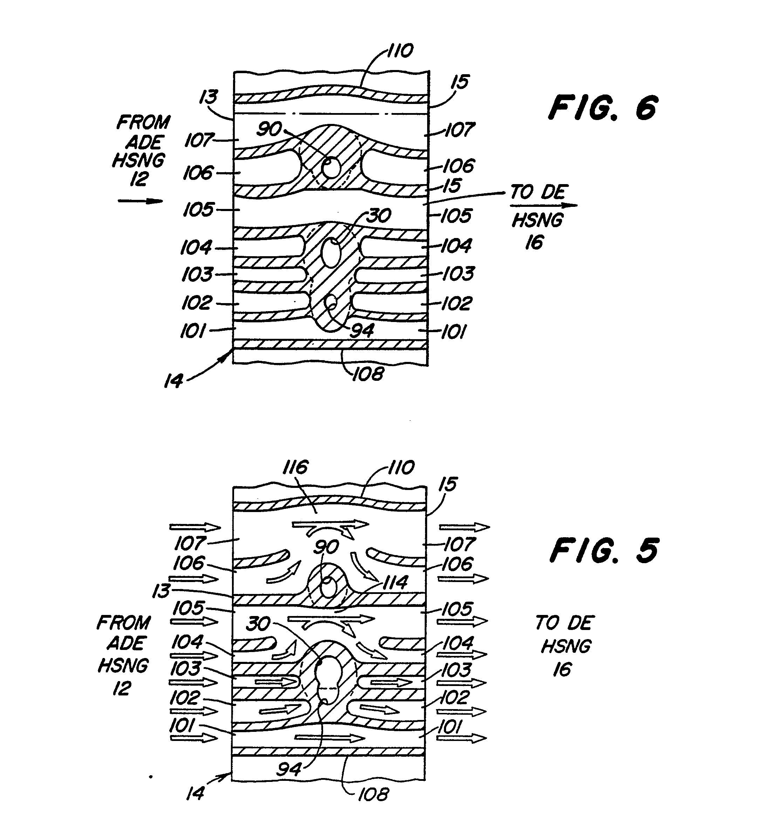

Wie aus den Figuren 4, 5 und 6 hervorgeht, weist der Totpunktteil des Gehäuseteils 14 eine Bohrung 90 zur Aufnahme einer in der Zeichnung nicht dargestellten Einspritzvorrichtung, die Zündkerzenbohrung 30 für eine nicht dargestellte Zündkerze und eine Bohrung 94 zur Aufnahme einer Pilot-Einspritzvorrichtung auf. Wie aus den Figuren 5 und 6 hervorgeht, befinden sich zwischen Rippen 108 und 110 sieben Kühlmittelkanäle 101 bis 107, die am Antriebsende 13 des Totpunkt-Gehäuseteils eintreten und sich in Richtung der Seite 15 (Antriebsseite = DE) des oberen Totpunktteiles des Gehäuseteils 14 erstrecken. Wie aus den Figuren 4 bis 6 hervorgeht, sind die Kanäle 102 und 103 zur Umgehung der Bohrung 30 und 94 mit Bezug auf die innere Wand 25 abgebogen, wenn sie sich in eine Vergabelung des Gehäuseteils 14 erstrecken und dann in einer Kammer 112 (Fig. 4) zusammenlaufen. Von der Kammer 112 laufen die Kanäle 102 und 103 wieder auseinander in zwei getrennte Kanäle 102 und 103 und treten an der Seite 15 (DE) des Gehäuseteils 14 hinaus.

Wie aus den Figuren 4 und 6 hervorgeht, verläuft der Kanal 105 in etwa gerade, wobei der Kanal 104 zur Umgehung der Bohrung 30 entsprechend kurvenförmig verläuft und mit dem Kanal 105 im Inneren des Totpunktteiles des Gehäuseteiles 14 zusammenkommt (Fig. 5).

Danach laufen die beiden Kanäle 104 und 105 wieder auseinander und weiter in zwei getrennten Kanälen, bis sie an der Seite 15 aus dem Gehäuseteil 14 hinaustreten.

Auf gleiche Weise treten auch die Kanäle 106 und 107 getrennt in das Antriebsende 13 ein. Die Kanäle 106 und 107 verlaufen ebenfalls zur Umgehung der Bohrung 90 an der Stelle 116 zusammen und trennen sich dann wieder, so daß sie getrennt aus der Seite 15 (DE) hinaustreten. Die in Gruppen angeordneten Kühlmittelkanäle 101 bis 107 korrespondieren mit den Gruppen der Kanäle 72 und 76 in den Gehäuseteilen 12 und 16 (ADE und DE).

Es wird darauf hingewiesen, daß der heißeste Anteil des Strömungsmittels sich im oberen Totpunktteil in der Nähe der Bohrungen 30 und 94 des Gehäuseteils 14 bildet. Dies ist der Teil, in dem sich relativ starke gewundene Kanäle 102, 103, 104 und 106 erstrecken. Die Kanäle 101, 105 und 107 verlaufen dagegen im wesentlichen geradlinig durch den Gehäuseteil 14, und zwar im Bereich, in dem das Strömungsmittel eine relativ geringe Wärme aufweist. Erfolgt die Gestaltung der Kanäle nicht in der bestimmten Weise, so kann die Situation auftreten, daß das Kühlmittel mit einer kleineren Geschwindigkeit in den Bereich fließt, in dem eine geringe Geschwindigkeit nicht erwünscht ist. Das vorliegende Kühlsystem weist Verengungen in den Kanälen 101, 105 und 107 auf.

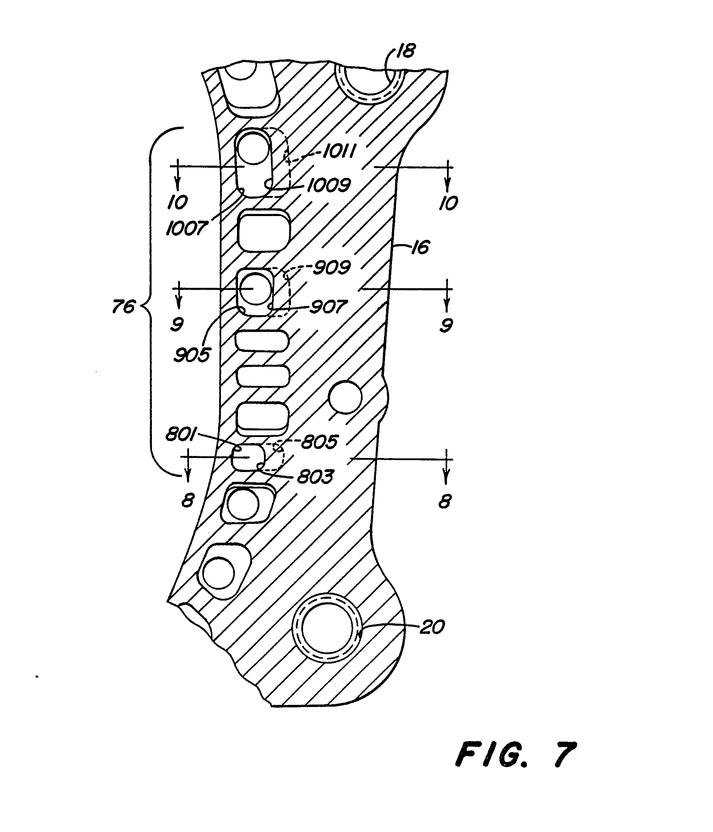

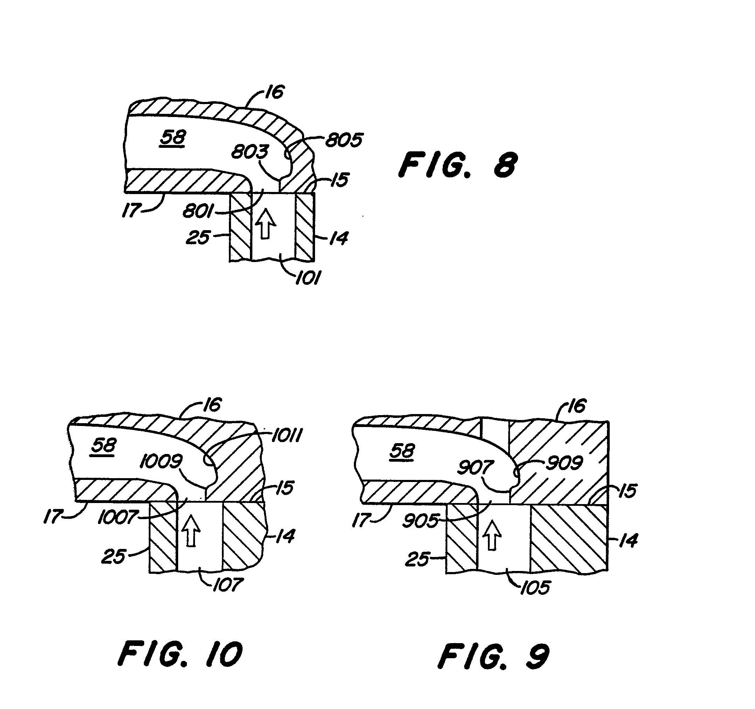

Dieses Kühlsystem läßt sich am besten aus den Figuren 7 bis 10 entnehmen. Der Gehäuseteil 16 weist eine Seite 17 auf, die zu Dichtungszwecken gegen die Seite 15 des Gehäuseteiles 14 anliegt. Wie aus den Figuren 5 und 7 bis 10 hervorgeht, gehen die Kanäle 101, 105 und 107 in die Kanäle 801, 905 und 1007 des Gehäuseteiles 16 (DE) über. Die Querschnittsflächen der Kanäle 801, 905 und 1007 sind durch Lippen 803, 907 und 1009 reduziert, die sich von inneren Wandteilen 805, 909 und 1011 nach innen erstrecken. Hierdurch wird der Strömungsfluß am stromabwärts liegenden Ende des jeweiligen Kanals 101, 105 und 107 beschränkt. Die Lippen 803, 907 und 1009 (Fig. 7) sind durch ausgezogene Linien wiedergegeben, während die Wandteile 805, 909 und 1011 in gestrichelten Linien dargestellt sind. Gemäß Fig. 7 weisen die anderen Kanäle im oberen Totpunktbereich nicht derartige Verengungen auf. Diese Kanäle weisen Öffnungen mit nicht vermindertem Querschnitt auf, die in ausgezogenen Linien dargestellt sind. Der Betrag der Verengung ist einstellbar, so daß die Geschwindigkeit des Kühlmittelflusses im wesentlichen in den sieben Kanälen 101 bis 107 gleich ist. Das gleiche Prinzip kann auch angewendet werden, um den Druckmittelfluß zu beeinflussen, um sich den unter - schiedlichen Wärmeströmungen zwischen den Kanälen anzupassen, wenn zwischen den Kanälen eine Veränderung eintritt. Es wird darauf hingewiesen, daß das Problem der Kühlung insbesondere bei einer stratifizierten bzw. mehrschichtigen Ladung eines Drehkolbenmotors auftritt, und zwar aufgrund der relativ großen Metallmassen im oberen Totpunktbereich des Motors. Jedoch ist bei jedem anderen Drehkolbenmotor eine ähnliche bzw. adäquate Kühlung erforderlich. Aus diesem Grunde kann die Strömungsverteilung des Kühlmittels auch bei anderen Drehkolbenmotoren angewendet werden.

Es wurde vorgeschlagen, den Grad der Verengung so auszuwählen, daß die Querschnittsfläche eines jeden Kanales 801, 905 und 1007 56 % der Querschnittsfläche der Kanäle 101, 105 und 107 beträgt. Hierdurch wird eine ausreichende Geschwindigkeit des Kühlmittels im heißen Bereich des oberen Totpunktteiles des Gehäuseteiles 14 erreicht. Weitere Verengungen können auch im stromaufwärts liegenden Teil der Kanäle 101, 105 und 107 vorgesehen werden, um den gleichen Strömungseffekt zu erreichen. Hierdurch wird der Druck im kritischen Bereich der Kanäle des Drehkolbenmotors etwas herabgesetzt und die nukleare Verdampfung verbessert. Weitere Verengungen können auch in den Kanälen 101, 105 und 107 mittels hervorstehender Teile vorgenommen werden, die anstelle der Verengungen in den Gehäuseteilen 12 oder 16 vorgesehen werden.

Beispielsweise bei einer Verbrennungskraftmaschine mit einem 640 cm³ (40 cubic-inch) Rotor und einer Gesamtkühlflüssigkeit von 121 l/min (32 gallons per minute) bewirkt das Kühlsystem einen maximalen Kühltemperaturanstieg von 10 Grad. Dieses System produziert eine Kühlflüssigkeits-Geschwindigkeit von 15 m/sek im Bereich der Einlaßöffnung 34, im Kompressionsbereich zwischen der Einlaßöffnung 34 und der oberen Totpunktstellung und im Bereich kurz vor der Auslaßöffnung 28. Die Kühlflüssigkeits-Geschwindigkeit beträgt im Anfangsbereich 27 m/sek (anfängliche Gasausdehnung) und 30 m/sek im oberen Totpunktbereich zwischen den Bohrungen 18 und 20. In dem unteren Leistungsbereich ist der Kühlmechanismus vollständig konvektiv ausgerichtet, aber im oberen Leistungsbereich und im oberen Totpunktbereich des Maschinengehäuses mit großer Strömung heißen Kühlmittels wird das Kühlsystem weitgehend von einem nuklearen Sieden bzw. Verdampfen bestimmt.

Ein besonderes Merkmal der beschriebenen Einrichtung besteht darin, daß bei Dominanz des nuklearen Siedens mit Bezug auf die konvektive Kühlung im heißen Strömungsbereich die kritischen Metalltemperaturen im heißen Strömungsbereich (oberer Totpunktbereich) eine Funktion der Strömung des heißen Kühlmittels und der Kühlsättigungstemperatur darstellen. In diesem Bereich kann die Metalltemperatur herabgesetzt werden, indem die Sättigungstemperatur (im wesentlichen der Siedepunkt) des Kühlmittels so klein wie möglich gehalten wird. Dies wird dadurch erreicht, daß der Kühlmitteldruck so klein wie möglich gehalten wird. Mit der beschriebenen Vorrichtung wird das dadurch erreicht, daß das Kühlmittel den Druckabfall im ersten Teil des Kühlhauses passiert, so daß der Druck des Kühlmittels reduziert wird und hierdurch die Temperatursättigung, bevor sie den heißen Strömungsbereich im oberen Totpunktbereich erreicht.

Zusätzlich werden mit der beschriebenen Vorrichtung aufsteigende Blasen und Dampfausstoß in die gleiche Richtung geleitet wie die Kühlmittelströmung. Obwohl der Kühlmittelfluß nicht direkt die Metalltemperatur beeinflußt, wenn der Wärmetransfer vorwiegend durch nukleares Sieden sich vollzieht, so wird doch die Entfernung des Dampfes dazu beitragen, daß die Verbrennungskraftmaschine unter der Durchbrenntemperatur (burnout-temperature) arbeitet.

**Ansprüche**

1. Drehkolbenverbrennungsmotor mit mindestens einem trochoidförmigen Drehkolbenzylinder-Gehäuseteil (14) und mit gruppenweise angeordneten Kühlmittelkanälen, die sich zumindest durch den oberen Totpunktbereich des Gehäuses (14) erstrecken, dadurch gekennzeichnet, daß zumindest ein Kühlmittelkanal (102, 103, 104, 106) der Gruppe einen kurvenförmigen Verlauf aufweist, der sich durch den ersten heißeren Teil des oberen Totpunktbereiches des Drehkolbenzylinder-Gehäuseteils (14) erstreckt, und daß zumindest ein weiterer Kühlmittelkanal (101, 105, 107) der Gruppe vorgesehen ist, der sich im wesentlichen geradlinig durch einen zweiten kühleren Teil des oberen Totpunktbereiches erstreckt, wobei zumindest in einem der Kühlmittelkanäle (101, 105, 107) eine Querschnittsverengung (803, 907, 1009) vorgesehen ist, die den Kühlmittelfluß begrenzt und für einen gleichmäßigen Kühlmittelfluß zwischen den einzelnen Kühlmittelkanälen sorgt.

2. Drehkolbenverbrennungsmotor nach Anspruch 1, dadurch gekennzeichnet, daß der Motor als Mehrschicht-Ladermotor ausgebildet ist und im oberen Totpunktbereich eine Zündkerzenbohrung (30) aufweist, die eine Pilot-Einspritzbohrung (94) - schneidet, und daß die beiden Bohrungen eine V-förmige Gehäusegabelung bilden, die von der inneren Oberfläche bzw. Wand (25) des Gehäuseteils - (14) bzw. Verbrennungsraumes einen Abstand aufweist, wobei zumindest ein Kühlmittelkanal (112, 102, 103) die V-förmige Gehäusegabelung passiert.

3. Drehkolbenverbrennungsmotor nach Anspruch 2, dadurch gekennzeichnet, daß der Motor einen End-Gehäuseteil (12) mit gruppenweise angeordneten Kühlmittelkanälen (101, 105, 107) aufweist, die sich zumindest durch einen Teil des Gehäuseteils erstrecken, wobei ein jeder Kühlmittel kanal einer Gruppe mit einem Kühlmittelkanal einer korrespondierenden Gruppe in Durchflußverbindung steht, und daß die Querschnittsverengung (803, 907, 1009) jeweils in dem Kühlmittelkanal (803, 907, 1009) vorgesehen ist, der mit einem weiteren Kühlmittelkanal (101, 105, 107) in Durchflußverbindung steht.

4. Drehkolbenverbrennungsmotor nach einem oder mehreren der vorherigen Ansprüche, dadurch gekennzeichnet, daß zumindest ein Kühlmittelkanal der ersten Gruppe Kühlmittelkanäle eine kleinere Verengung aufweist als zumindest ein weiterer Kühlmittelkanal der ersten Gruppe, wobei zumindest ein Kühlmittelkanal der zweiten Gruppe Kühlmittelkanäle ebenfalls eine Verengung aufweist, und daß zumindest ein Kühlmittelkanal der zweiten Gruppe zumindest mit einem Kühlmittelkanal der ersten Gruppe in Durchflußverbindung steht.

5. Drehkolbenverbrennungsmotor nach einem oder mehreren der vorherigen Ansprüche, dadurch gekennzeichnet, daß die im Bereich der Kühlmittelkanäle (58 - 76) vorgesehenen Rippen - (57) unterschiedlich lang sind.

6. Drehkolbenverbrennungsmotor nach einem oder mehreren der vorherigen Ansprüche, dadurch gekennzeichnet, daß am Ende des Drehkolbengehäuseteils (14) Stromteilerrippen vorgesehen sind.

FIG. 1

FIG. 2

0 203 480

*F I G.  3*

**FIG. 4**

FIG. 6

FIG. 5

FIG. 7

FIG. 8

FIG. 10

FIG. 9